# EUROPÄISCHE PATENTSCHRIFT

(11) **EP 1 537 697 B1**
(45) Veröffentlichungstag und Bekanntmachung des Hinweises auf die Patenterteilung: **28.01.2009**
(21) Anmeldenummer: 03793628.3
(22) Anmeldetag: 23.07.2003
(51) Int. Cl.: H04L 1/24, H04L 25/49

(54) **VERFAHREN UND VORRICHTUNG ZUR SCHNELLEN ERKENNUNG VON ÜBERTRAGUNGSFEHLERN**
METHOD AND DEVICE FOR RAPID DETECTION OF TRANSMISSION ERRORS
PROCEDE ET DISPOSITIF D'IDENTIFICATION RAPIDE D'ERREURS DE TRANSMISSION

(30) Priorität: 06.09.2002 DE 10244066
(43) Veröffentlichungstag der Anmeldung: 08.06.2005
(73) Patentinhaber: Volkswagen AG, 38436 Wolfsburg (DE)
(72) Erfinder: DÖRING, Martin, 38124 Braunschweig (DE); HOPPMANN, Michael, 38176 Wendeburg (DE); KUCKERTZ, Heinz, 38302 Wolfenbüttel (DE)
(74) Vertreter: Patentanwälte Bressel und Partner
(86) Internationale Anmeldenummer: PCT/EP2003/008039
(87) Internationale Veröffentlichungsnummer: WO 2004/023707

(56) Entgegenhaltungen:
- US-A- 4 234 897
- US-A- 4 502 142
- US-B1- 6 437 710

## Beschreibung

Die Erfindung bezieht sich auf ein Verfahren und eine Vorrichtung zur schnellen Erkennung von Übertragungsfehlern bei einer digitalen Übertragung von Daten oder Nachrichten.

Das so genannte Xerxes-Verfahren für eine digitale Datenübertragung ist beispielsweise aus der US 4,234,897 bekannt. Die zu übertragenden Daten oder Nachrichten liegen digital vor oder werden für eine digitale Übertragung digitalisiert. Die digitale oder digitalisierte Nachricht wird in bestimmte Bitfolgen unterteilt, denen jeweils eine mittelwertfreie Sequenz von Signalen mit hohem oder niederem Pegel zugeordnet ist. Die Signale haben jeweils eine minimale Pegeldauer Tmin und eine maximale Pegeldauer Tmax.

Eine schnelle Erkennung von Übertragungsfehlern ist für eine Erhöhung einer Funktionssicherheit insbesondere bei sicherheitsrelevanten Applikationen von Bedeutung. Dabei ist ein CRC (cyclic redundacy check) bekannt, durch den eine Überprüfung auf verschiedenen ISO/OSI-Ebenen durchgeführt wird. Die Überprüfung findet beispielsweise auf der Anwendungsebene statt, weshalb ein derartiges Fehlerüberprüfungssystem sehr langsam ist.

Aus der US-4,502,142 ist ein Verfahren zur Fehlererkennung eines digitalen Signals von Miller Codes und ähnlichen Codes bekannt, wobei die Pegeldauer des empfangenen Signals gemessen und zur Fehlererkennung verwendet wird.

Der Erfindung liegt daher das technische Problem zugrunde, ein Verfahren und eine Vorrichtung zu schaffen, durch welche auf unterster Kommunikationsebene eine schnelle Erkennung von Übertragungsfehlern möglich ist.

Die Lösung des Problems ergibt sich durch die Gegenstände mit den Merkmalen der Ansprüche 1 und 10. Weitere vorteilhafte Ausgestaltungen der Erfindung ergeben sich aus den Unteransprüchen.

Das Verfahren und die Vorrichtung der Fehlererkennung nutzen die Phänomene einer digitalen Übertragung von Nachrichten oder Daten, indem die Mittelfreiheit von Sequenzen ermittelt wird. Bei einer mittelwertfreien Datenübertragung ergibt sich am. Ende jeder Sequenz als Integral der Signale eine durch die Sequenz resultierende Gleichspannung von Null Volt. Sind Sequenzen unvollständig und/oder fehlerhaft übertragen, können Restspannungen verbleiben. Die entsprechenden Nachrichten können dann gekennzeichnet werden.

Weiter vorzugsweise wird auch die Pegeldauer ermittelt und zur Fehlererkennung herangezogen. Innerhalb einer Sequenz ist eine Pegeldauer, d.h. die Dauer, in welcher ein Signal eines hohen oder eines niederen Pegels anliegt, variabel. Die Pegeldauer hängt sowohl von der aktuell übertragenen Sequenz ab, als auch von der vorangegangenen. Die Pegeldauer muss jedoch bei einer fehlerfreien Datenübertragung immer innerhalb des Intervalls [Tmin, Tmax] liegen. Liegen Signale an, welche kürzer als Tmin oder länger als Tmax sind, so tritt ein Fehler in der Nachrichtenübertragung auf und die Nachricht wird ebenfalls als ungültig gekennzeichnet.

In einer bevorzugten Ausführungsform wird eine Auswertung der Mittelfreiheit und/oder der Pegeldauer direkt auf dem physikalischen Übertragungsmedium, beispielsweise einem Datenbus, durchgeführt. Die Fehlererkennung kann somit auf unterster Kommunikationsebene erfolgen und ist unabhängig von anderen bekannten Methoden der Überwachung. Eine inhaltliche Auswertung der Daten ist nicht notwendig, so dass kein Daten-Overhead entsteht. Die Auswertung auf dem Übertragungsmedium kann an einem Empfänger der Nachricht erfolgen oder durch eine von dem Empfänger unabhängige Überwachungseinrichtung.

In einer weiteren Ausführungsform wird eine Mittelwertfreiheit ermittelt, indem die empfangenen Signale in eine Empfangs-Bitfolge decodiert werden, einzelne Bits der Empfangs-Bitfolge in mindestens einer Empfangs-Sequenz zusammengefasst werden und die zu der Empfangs-Sequenz auf Gleichspannungsfreiheit untersucht werden. Die Gleichspannungsfreiheit am Ende einer Sequenz ist durch einen geeigneten Sensor, beispielsweise einen Spannungsmesser, aufnehmbar und/oder durch Integration der empfangenen Signale ermittelbar. Die Integration kann dabei hardwaretechnisch und/oder softwaretechnisch umgesetzt werden.

In einer bevorzugten Ausführungsform werden die Nachrichten mit einem Xerxes-Format codiert und decodiert und die Empfangs-Sequenz entspricht den Codierungsregeln. Das Xerxes Verfahren zur gleichstromfreien Codierung für eine Datenübertragung ist aus der US 4,234,897 bekannt. Der Xerxes-Code erzeugt ein Übertragungssignal, aus dem das Originalsignal codiert werden kann. Jeder Potentialsprung in einer Zellenmitte wird als logische Eins erkannt. Ein Potentialsprung am Anfang einer solchen Bitzelle, welche von einer Bitzelle ohne Potentialsprung gefolgt wird, wird ebenfalls als logische Eins in jeder Bitzelle gewertet. Jeder andere Potentialsprung am Bitzellenanfang wird als logische Null decodiert. Alle anderen Zellen, in denen keine Potentialsprünge vorliegen, werden auch mit einer logischen Null bewertet. Für eine Ermittlung der Gleichstromfreiheit werden beim Empfänger und/oder in der Überwachungseinheit die empfangenen Signale in Empfangs-Sequenzen zusammengefasst, welche den Codierungsregeln entsprechen. Verletzen die zugehörigen empfangenen Signale die Codierungsregeln, so liegt ein Übertragungsfehler vor.

In einer weiteren Ausführungsform wird die Gleichspannungsfreiheit überprüft, indem eine an einem Übertragungsmedium anliegende Restspannung ermittelt wird. Als Übertragungsmedium ist beispielsweise ein Bussystem mit verschiedenen Knoten eingesetzt. In zeitgesteuerten Bussystemen für sicherheitsrelevante Applikationen ist ein Kommunikationsablauf anhand von Zeitspannen, in denen die einzelnen Knoten senden dürfen, vorgegeben. Die Länge dieser Zeitspannen ist in vollständige Xerxes-Sequenzen teilbar. Am Ende jeder Zeitspanne schließt sich eine Pause, eine sogenannte IFG (Inter Frame Gap) an. In dieser Pause werden die empfangenen Daten oder Nachrichten verarbeitet. Während der IFG wird kein definiertes Signal auf den Bus gegeben. Die Spannung auf dem Bus ist daher Null Volt, sofern die Xerxes-Sequenzen korrekt und vollständig übertragen wurden. Weicht die Busspannung von diesem Wert deutlich ab, so wurde mindestens eine der Sequenzen fehlerhaft übertragen und/oder gestört.

In einer bevorzugten Ausführungsform wird eine auftretende Restspannung innerhalb der IFG abgebaut. Dies erfolgt z.B. durch geeignete RC-Glieder. Dadurch wird eine Fortpflanzung von Fehlern über mehrere Zeitspannen hinweg vermieden.

In einer bevorzugten Ausführungsform werden die Pegeldauer und/oder die Restspannung innerhalb eines Toleranzfeldes geprüft. Geringe Restspannungen können auch auftreten, wenn eine Nachricht nicht ohne Rest in definierte Bitfolgen unterteilbar ist. Die Berücksichtigung von Toleranzfeldem, welche zur Überprüfung der Restspannung beispielsweise von einer Höhe der Signalpegel abhängig sind, ist daher sinnvoll, damit nicht fälschlicherweise ein Fehler angezeigt wird.

In einer weiteren Ausführungsform wird bei einer fehlerhaften Übertragung ein Membership gesetzt. Dadurch kann ein fehlerhafter Knoten gekennzeichnet werden, dieser kann aber unter Umständen weiterhin an einer Kommunikation teilnehmen.

Durch die Fehlererkennung wird die Funktionssicherheit erhöht, indem eine schnelle Reaktion auf Fehler und damit auch eine hohe Verfügbarkeit der Systeme realisiert wird. Die Fehlererkennung wird bevorzugt bei sicherheitskritischen Applikationen, wie X-by-wire-Systemen eingesetzt. Der Einsatz ist jedoch nicht auf derartige Applikationen beschränkt.

Die Erfindung wird nachfolgend anhand eines bevorzugten Ausführungsbeispiels näher erläutert. Die Figuren zeigen:
- Fig. 1.1-1.4: Fehleruntersuchung beim Xerxes-Format
- Fig. 2: Codierung mit Xerxes-Format
- Fig. 3: Gleichspannungsfreiheit bei unvollständigen Bitfolgen

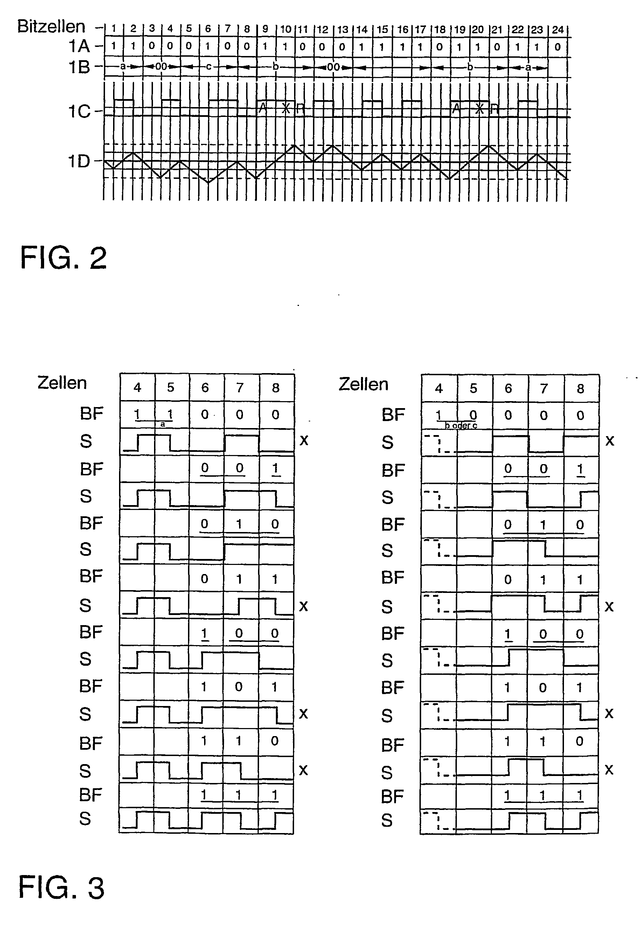

Fig. 2 zeigt eine Codierung einer Nachricht 1A mit dem Xerxes-Format. Die Nachricht wird gemäß 1B in definierte Bitfolgen a, b, c, 00 unterteilt. Den Bitfolgen sind Sequenzen von Signalen gemäß 1C zugeordnet. 1D zeigt das Integral der Sequenzen 1C. Die Nummerierung der Bitzellen ist in der ersten Zeile wiedergegeben.

Prinzipiell wird nach Xerxes-Format eine logische eins (1-Bit) als Potentialsprung in einer (Bit-)Zellenmitte, eine logische Null (0-Bit) als Potentialsprung an einem (Bit-) Zellenanfang übertragen. 1-Bits stellen dabei kein Gleichstromproblem dar. Ist die Anzahl an 0-Bits gerade, so ergibt sich ebenfalls kein Gleichstromproblem. Um ein entstehendes Ungleichgewicht bei einer ungeraden Anzahl an 0-Bits auszugleichen, werden mindestens vier Bitfolge-Typen eingeführt: ein Bitfolge-Typ (00), in dem 0-Bits paarweise zusammengefaßt werden, ein Bitfolge-Typ (a), welcher aus einer beliebigen Anzahl an 1-Bits besteht, aber keine 0-Bits aufweist, ein Bitfolge-Typ (b) mit einer geraden Anzahl von 1-Bits zwischen zwei 0-Bits und ein Bitfolge-Typ (c) mit einer ungeraden Anzahl von 1-Bits zwischen zwei 0-Bits. Diese Bitfolge-Typen sind alle gleichstromfrei, da sie entweder keine oder eine gerade Anzahl an 0-Bits aufweisen. Die Zeile 1 B zeigt eine Aufteilung der Nachricht in die vier Bitfolge-Typen. Wenn die Sequenz eine logische Null nach einer geraden Anzahl von 1-Bit-Zellen erreicht (dies entspricht dem Bitfolgen-Typ (b)), wird die nachfolgende logische Null durch einen Potentialsprung am Zellenanfang codiert. Durch diese Codierung ist jede Folge einer geraden Anzahl von 1-Bit-Zellen, die von jeweils einer 0-Bit-Zelle eingerahmt wird, frei von Gleichspannungs-Komponenten. Andererseits wird die 1-Bit-Zelle am Ende einer ungeraden 1-Bit-Folge durch einen Potentialsprung in der Zellenmitte markiert und der Potentialsprung für die folgende 0-Bit-Zelle wird unterdrückt, so entsteht wieder ein mittelwertfreies Signal. In einer Sequenz nach Xerxes-Format sind die Pegeldauern minimal 1T und maximal 2,5T, wobei T die logische Bitdauer eines zugehörigen Controllers ist. Die Gleichstromfreiheit der Sequenzen ist Fig. 2 Kurve 1D zu entnehmen. Das Integral über jede Sequenz ist Null.

Bei Empfänger wird aus dem Übertragungssignal das Originalsignal decodiert. Die Decodierung wird mit folgenden Regeln durchgeführt: Jeder Potentialsprung in einer Zellenmitte wird als logische Eins erkannt. Ein Potentialsprung am Anfang einer solchen Bitzelle, welche von einem Potentialsprung gefolgt wird, wird als logische Eins in jeder der beiden Bitzelle gewertet. Ein Potentialsprung am Anfang gefolgt von 2,5 Bitzellen auf gleichem Pegel und 1,5 Bitzellen auf entgegengesetztem Pegel wird als logische Eins in den ersten drei Bitzellen gefolgt von einer logische Null gewertet. Ein Potentialsprung am Zellenanfang gefolgt von zwei Bitzellen auf gleichem Pegel, 2,5 Bitzellen auf entgegengesetztem Pegel und 1,5 Bitzellen auf dem ursprünglichen Pegel entspricht fünf logischen Einsen gefolgt von einer Null.

Die Fig. 1.1-1.4 zeigen Fehlerbetrachtungen. Dabei sind jeweils eine digitale Nachricht, eine Aufteilung der Nachricht in Bitfolge-Typen sowie die zugehörigen fehlerfreien Sequenzen dargestellt. Es wird angenommen, dass bei einer seriellen Übertragung einer Nachricht das Signal einer Bitzelle falsch übernommen wird, indem fälschlicherweise in der Zellenmitte ein Potentialsprung stattfindet, oder dass der richtige Potentialsprung verspätet registriert wird. Die Fehler sind durch einen Pfeil markiert. Dabei verschiebt sich der Potentialsprung von der Zellenmitte an den hinteren Zellenrand. Dadurch entstehende "Übersetzungsfehler" werden betrachtet, sowie eventuell daraus entstehende Folgefehler. In der letzten Zeile ist jeweils eine aus der fehlerbehafteten Sequenz decodierte Nachricht dargestellt. Die durchgezogenen Striche unter dem Bitmuster der Rücktransformation geben Bitfolgen gemäß der Bitfolge-Typen a, b, c, 00 wieder. Die Stelle, an welcher der Fehler erkannt wird, ist jeweils durch einen Stern * markiert.

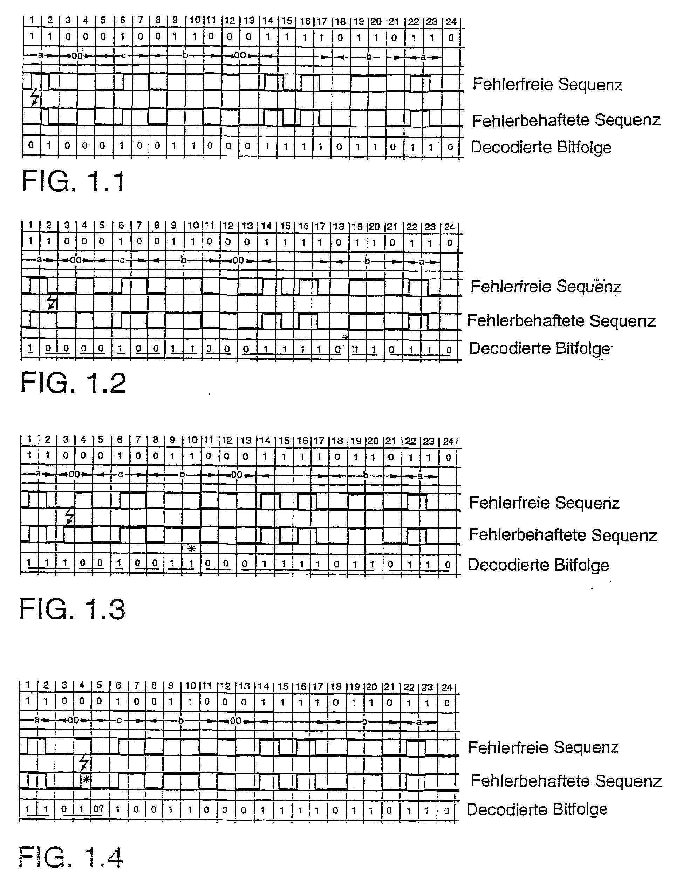

In Fig. 1.1 führt der fälschlich registrierte Potentialsprung am Zellenbeginn zu einem Empfangsbit von nur T/2. Dies kann von einem Decoder nicht interpretiert werden und führt zu einer Fehlermeldung. Es treten jedoch keine Folgefehler auf.

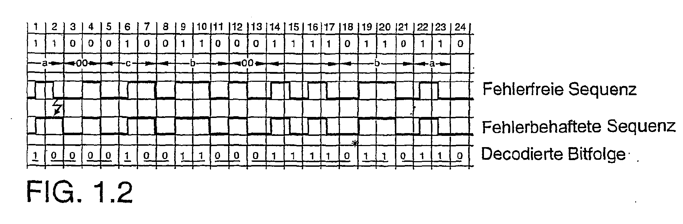

In Fig. 1.2 führt das falsch übermittelte Signal in der Bitzelle 2 zu einer von der Codierung abweichenden Zuordnung der empfangenen Bits zu Bitfolge-Typen. Das Xerxes-Format schreibt für die Signale der Bitzellen 13 bis 18 dabei ein anderes Bitmuster vor als das empfangene Bitmuster. Das empfangen Bitmuster ist nicht gleichstromfrei. Dadurch ist eine Fehlererkennung möglich. Es treten jedoch ebenfalls keine Folgefehler auf.

In Fig. 1.3 wird eine Störung angenommen, die fälschlich zu einem Potentialsprung in der Zellenmitte von Zelle 3 führt. Folgefehler treten nicht auf. Das Xerxes-Format schreibt jedoch wie bei Fig. 2.2 für die Signale der Bitzellen 9 und 10 ein anderes Bitmuster vor wodurch eine Fehlererkennung möglich ist.

In Fig. 1.4 ist eine fehlerhafte Übertragung in Zelle 4 dargestellt. Dieser Fehler führt zu einem Signal mit Pegeldauer T/2. In den Fehlerfällen, in denen beim Empfänger ein Signal mit einer Dauer von T/2 registriert wird, muss wegen dieses im Xerxes verbotenen Zustands sofort eine Fehlermeldung erfolgen. Da im Xerxes-Format die Sequenzen vorausschauend interpretiert werden (maximal 2,5T), wird dieser Fehler rechtzeitig vor weiteren Decodierungsschritten erkannt. Ebenso erwarten Signale, die in einer Zellenmitte beginnen, spätestens nach 2T einen Potentialsprung. Erfolgt dieser nicht, liegt ein Fehler vor.

Analog zu den Fig. 1.1 bis 1.4 lassen sich Fehler in anderen Zellen erkennen. Lediglich ein Fehler in den Zellen 23 und 24 ist durch einen Verstoß gegen das Xerxes-Format nicht erkennbar. Derartige Fehler lassen sich jedoch anhand der verbleibenden Restspannung auf dem Übertragungsmedium erkennen.

Fig. 3 zeigt eine Untersuchung zur Gleichspannungsfreiheit. Dabei sind Bitfolgen BF sowie zugehörige Sequenzen S dargestellt. Bleiben bei einer Aufteilung des Datenwortes oder der Nachricht in die einzelnen Bitfolgen a, b, c oder 00 einige Bitzellen übrig, die keine neue vollständige Bitfolge ergeben, so entsteht über das gesamte Datenwort eine gering Restgleichspannung. Diese Restspannung kann, wie in Fig. 3 dargestellt ist, maximal den Wert der Integration über eine Bitzellendauer annehmen. Nachrichten mit Restspannung sind durch ein X gekennzeichnet. Einer verbleibende Restspannung ist in nachfolgenden Übertragungspausen entgegenzuwirken, um so einen Einfluß auf nachfolgende Übertragungen zu minimieren.

## Patentansprüche

1. Verfahren zur Übertragung mindestens einer digitalen und/oder digitalisierten Nachricht, wobei die Nachricht in bestimmte Bitfolgen unterteilt wird, einer Bitfolge eine gleichstromfreie Sequenz von Signalen mit hohem oder niedrigem Pegel zugeordnet ist und eine Pegeldauer innerhalb eines Intervalls [Tmin, Tmax] liegt,
**dadurch gekennzeichnet, dass**
zur Fehlererkennung in einer digitalen Übertragung eine Gleichspannungsfreiheit mindestens einer Sequenz ermittelt wird.

2. Verfahren nach Anspruch 1, **dadurch gekennzeichnet, dass** zusätzlich die Pegeldauer eines Signals ermittelt wird.

3. Verfahren nach Anspruch 1 oder 2, **dadurch gekennzeichnet, dass** eine Auswertung der Gleichspannungsfreiheit und/oder der Pegeldauer direkt auf dem physikalischen Übertragungsmedium durchgeführt wird.

4. Verfahren nach Anspruch 1, 2 oder 3, **dadurch gekennzeichnet, dass** empfangene Signale in eine Empfangs-Bitfolge decodiert werden, einzelne Bits der Empfangs-Bitfolge in mindestens einer Empfangs-Sequenz zusammengefasst werden und die Empfangs-Sequenz auf Gleichspannungsfreiheit untersucht wird.

5. Verfahren nach Anspruch 4, **dadurch gekennzeichnet, dass** die Nachrichten mit einem Xerxes-Format codiert und decodiert werden und die Empfangs-Sequenz den Xerxes-Codierungsregeln entspricht.

6. Verfahren nach einem der Ansprüche 1 bis 5, **dadurch gekennzeichnet, dass** eine an einem Übertragungsmedium anliegende Restspannung ermittelt wird.

7. Verfahren nach einem der vorgenannten Ansprüche, **dadurch gekennzeichnet, dass** die Übertragung über ein zeitgesteuertes Bussystem erfolgt und eine auftretende Restspannung innerhalb einer Inter Frame Gap abgebaut wird.

8. Verfahren nach einem der vorgenannten Ansprüche, **dadurch gekennzeichnet, dass** eine zulässige Pegeldauer und/oder eine zulässige Restspannung innerhalb eines Toleranzfeldes liegt.

9. Verfahren nach einem der vorgenannten Ansprüche, **dadurch gekennzeichnet, dass** bei einer fehlerhaften Übertragung ein Membership zur kennzeichnung eines Fehlerhaften Knotens in einem Bussystem gesetzt wird.

10. Vorrichtung zur Übertragung mindestens einer digitalen und/oder digitalisierten Nachricht auf einem Übertragungsmedium, bestehend aus mindestens einem Codierungsmittel derart ausgebildet, dass die Nachricht in bestimmte Bitfolgen unterteilt wird und einer Bitfolge eine gleichstrormfreie Sequenz von Signalen mit hohem oder niederem Pegel zugeordnet wird und eine Pegeldauer innerhalb eines Intervalls [Tmin, Tmax] liegt,
**dadurch gekennzeichnet, dass**
mindestens ein Sensor- und/oder Rechenmittel zur Fehlerkennung in einer digitalen Übertragung durch Ermittlung einer Gleichspannungsfreiheit mindestens einer Sequenz , vorgesehen ist.

11. Vorrichtung nach Anspruch 10, **dadurch gekennzeichnet, dass** zusätzlich durch das eine Sensor- und/oder Rechenmittel die Pegeldauer mindestens eines Signals ermittelt wird.

12. Vorrichtung nach Anspruch 10 oder 11, **dadurch gekennzeichnet, dass** das Sensor und/oder Rechenmittel mit dem physikalischen Übertragungsmedium wirkverbunden ist.

13. Vorrichtung nach Anspruch 10, 11 oder 12, **dadurch gekennzeichnet, dass** mindestens ein Decodierungsmittel vorgesehen ist, welches empfangene Signale in eine Empfangs-Bitfolge decodiert und einzelne Bits der Empfangs-Bitfolge in mindestens einer Empfangs-Sequenz zusammenfasst und durch das Sensor- und/oder Rechenmittel die Empfangs-Sequenz auf Gleichspannungsfreiheit untersucht wird.

14. Vorrichtung nach Anspruch 13, **dadurch gekennzeichnet, dass** die Nachrichten mit einem Xerxes-Format codiert und decodiert werden und die Empfangs-Sequenz den Xerxes-Codierungsregeln entspricht.

15. Vorrichtung nach einem der Ansprüche 10 bis 14, **dadurch gekennzeichnet, dass** eine an dem Übertragungsmedium anliegende Restspannung durch das Sensor- und/oder Rechenmittel ermittelt wird.

16. Vorrichtung nach einem der Ansprüche 10 bis 15, **dadurch gekennzeichnet, dass** das Übertragungsmedium als zeitgesteuertes Bussystem ausgebildet ist und die Vorrichtung Mittel umfasst, durch welche eine auftretende Restspannung innerhalb einer Inter Frame Gap abgebaut wird.

17. Vorrichtung nach einem der Ansprüche 10 bis 16, **dadurch gekennzeichnet, dass** eine zulässige Pegeldauer und/oder eine zulässige Restspannung innerhalb eines Toleranzfeldes liegt.

18. Vorrichtung nach einem der Ansprüche 10 bis 17, **dadurch gekennzeichnet, dass** durch ein Rechen- und/oder Übertragungsmittel bei einer fehlerhaften Übertragung ein Membership zur kennzeichnung eines Fehlerhaften Knotens in einem Bussystem gesetzt wird.

## Claims

1. Method for transmitting at least one digital and/or digitized message, wherein the message is divided into particular bit strings, one bit string is allocated a DC-free sequence of signals with a high or low level, and a level duration is within a range [Tmin, Tmax],
**characterized in that**
errors are recognized in a digital transmission by ascertaining that at least one sequence is free of DC voltage.

2. Method according to Claim 1, **characterized in that**, additionally, the level duration of a signal is ascertained.

3. Method according to Claim 1 or 2, **characterized in that** the freedom from DC voltage and/or the level duration is/are evaluated directly on the physical transmission medium.

4. Method according to Claim 1, 2 or 3, **characterized in that** received signals are decoded into a received bit string, individual bits of the received bit string are combined in at least one received sequence, and the received sequence is examined for freedom from DC voltage.

5. Method according to Claim 4, **characterized in that** the messages are encoded and decoded using a Xerxes format, and the received sequence is based on the Xerxes encoding rules.

6. Method according to one of Claims 1 to 5, **characterized in that** a residual voltage on a transmission medium is ascertained.

7. Method according to one of the preceding claims, **characterized in that** the transmission is effected using a time-controlled bus system, and any residual voltage which appears is reduced within an interframe gap.

8. Method according to one of the preceding claims, **characterized in that** an admissible level duration and/or an admissible residual voltage is/are within a tolerance zone.

9. Method according to one of the preceding claims, **characterized in that** a membership is set to identify an erroneous node in a bus system in the event of an erroneous transmission.

10. Apparatus for transmitting at least one digital and/or digitized message on a transmission medium, comprising at least one encoding means in a form such that the message is divided into particular bit strings, and one bit string is allocated a DC-free sequence of signals with a high or low level, and a level duration is within a range [Tmin, Tmax],
**characterized in that**
at least one sensor and/or computation means is provided for error recognition in a digital transmission by virtue of ascertainment that at least one sequence is free of DC voltage.

11. Apparatus according to Claim 10, **characterized in that**, additionally, the one sensor and/or computation means ascertains the level duration of at least one signal.

12. Apparatus according to Claim 10 or 11, **characterized in that** the sensor and/or computation means is operatively connected to the physical transmission medium.

13. Apparatus according to Claim 10, 11 or 12, **characterized in that** at least one decoding means is provided which decodes received signals into a received bit string and combines individual bits of the received bit string in at least one received sequence, and the sensor and/or computation means examines the received sequence for freedom from DC voltage.

14. Apparatus according to Claim 13, **characterized in that** the messages are encoded and decoded using a Xerxes format, and the received sequence is based on the Xerxes encoding rules.

15. Apparatus according to one of Claims 10 to 14, **characterized in that** a residual voltage on the transmission medium is ascertained by the sensor and/or computation means.

16. Apparatus according to one of Claims 10 to 15, **characterized in that** the transmission medium is in the form of a time-controlled bus system, and the apparatus comprises means which reduce a residual voltage appearing within an interframe gap.

17. Apparatus according to one of Claims 10 to 16, **characterized in that** an admissible level duration and/or an admissible residual voltage is/are within a tolerance zone.

18. Apparatus according to one of Claims 10 to 17, **characterized in that** a computation and/or transmission means sets a membership to identify an erroneous node in a bus system in the event of an erroneous transmission.

## Revendications

1. Procédé de transmission d'au moins un message numérique et/ou numérisé, le message étant divisé en successions de bits définies, une séquence de signaux sans courant continu étant associée à une succession de bits de niveau bas ou élevé et la durée d'un niveau étant comprise dans un intervalle [Tmin, Tmax] donné, **caractérisé en ce qu'**on détermine l'absence de tension continue sur au moins une séquence pour identifier les erreurs dans une transmission numérique.

2. Procédé selon la revendication 1, **caractérisé en ce qu'**on détermine en outre la durée à un niveau donné d'un signal.

3. Procédé selon la revendication 1 ou 2, **caractérisé en ce qu'**on analyse l'absence de tension continue et/ou la durée à un niveau donné directement sur le support de transmission physique.

4. Procédé selon la revendication 1, 2 ou 3, **caractérisé en ce que** les signaux reçus sont décodés pour obtenir une succession de bits en réception, **en ce que** les différents bits de la succession de bits en réception sont regroupés pour former au moins une séquence de réception et **en ce qu'**on recherche dans la séquence de réception une absence de tension continue.

5. Procédé selon la revendication 4, **caractérisé en ce que** les messages sont codés et décodés au format Xerxes et que la séquence de réception est conforme aux règles de codage Xerxes.

6. Procédé selon l'une quelconque des revendications 1 à 5, **caractérisé en ce qu'**on détermine une tension résiduelle sur le support de transmission.

7. Procédé selon l'une quelconque des revendications précédentes, **caractérisé en ce que** la transmission est réalisée par l'intermédiaire d'un système de bus à commande temporelle et **en ce qu'**une tension résiduelle est résorbée pendant un intervalle inter-trame (Inter Frame Gap).

8. Procédé selon l'une quelconque des revendications précédentes, **caractérisé en ce que** la durée autorisée à un niveau donné et/ou la tension résiduelle autorisée se situent dans une plage de tolérances donnée.

9. Procédé selon l'une quelconque des revendications précédentes, **caractérisé en ce qu'**une appartenance (membership) est établie en cas de transmission erronée afin de repérer un noeud défectueux dans un système de bus.

10. Dispositif de transmission d'au moins un message numérique et/ou numérisé sur un support de transmission, composé d'au moins un moyen de codage configuré de telle sorte que le message est divisé en successions de bits définies et qu'une séquence de signaux sans courant continu est associée à une succession de bits de niveau bas ou élevé et que la durée d'un niveau est située dans un intervalle [Tmin, Tmax], **caractérisé en ce qu'**au moins un moyen de détection et/ou de traitement est prévu pour déterminer les erreurs dans une transmission numérique par détermination d'une absence de tension continue dans au moins une séquence.

11. Dispositif selon la revendication 10, **caractérisé en ce que** le moyen de détection et/ou de traitement détermine en outre la durée à un niveau donné d'au moins un signal.

12. Dispositif selon la revendication 10 ou 11, **caractérisé en ce que** le moyen de détection et/ou de traitement est relié de façon interactive au support de transmission physique.

13. Dispositif selon la revendication 10, 11 ou 12, **caractérisé en ce qu'**au moins un moyen de décodage est prévu, celui-ci décodant les signaux reçus en une succession de bits en réception et regroupant les différents bits de la succession de bits en réception pour former au moins une séquence de réception et **en ce que** le moyen de détection et/ou de traitement recherche l'absence de tension continue sur la séquence de réception.

14. Dispositif selon la revendication 13, **caractérisé en ce que** les messages sont codés et décodés au moyen du format Xerxes et **en ce que** la séquence de réception est conforme aux règles de codage Xerxes.

15. Dispositif selon l'une quelconque des revendications 10 à 14, **caractérisé en ce que** le moyen de détection et/ou de traitement détermine la présence d'une tension résiduelle sur le support de transmission.

16. Dispositif selon l'une quelconque des revendications 10 à 15, **caractérisé en ce que** le support de transmission prend la forme d'un système de bus à commande temporelle et **en ce que** le dispositif comprend des moyens permettant de résorber une tension résiduelle pendant un intervalle inter-trame.

17. Dispositif selon l'une quelconque des revendications 10 à 16, **caractérisé en ce que** la durée autorisée à un niveau donné et/ou la tension résiduelle autorisée se situent dans une plage de tolérances donnée.

18. Dispositif selon l'une quelconque des revendications 10 à 17, **caractérisé en ce qu'**une appartenance est établie à l'aide d'un moyen de traitement et/ou de transmission en cas de transmission erronée afin de repérer un noeud défectueux dans un système de bus.
